# EUROPÄISCHE PATENTSCHRIFT

(11) **EP 2 640 567 B1**
(45) Veröffentlichungstag und Bekanntmachung des Hinweises auf die Patenterteilung: **31.12.2014**
(21) Anmeldenummer: 11784997.6
(22) Anmeldetag: 16.11.2011
(51) Int. Cl.: B29C 70/48, B29C 33/02, B29C 33/20, B29C 45/26, B29C 33/48, B29D 99/00, B64F 5/00, B64C 1/00, B29L 31/30, B29C 70/46

(54) **VERFAHREN UND VORRICHTUNG ZUM HERSTELLEN VON ZYLINDRISCHEN GROßSTRUKTUREN**
METHOD AND DEVICE FOR PRODUCING LARGE CYLINDRICAL STRUCTURES
PROCÉDÉ ET DISPOSITIF DE FABRICATION DE GRANDES STRUCTURES CYLINDRIQUES

(30) Priorität: 19.11.2010 DE 102010051739
(43) Veröffentlichungstag der Anmeldung: 25.09.2013
(73) Patentinhaber: Siempelkamp Maschinen- und Anlagenbau GmbH, 47803 Krefeld (DE)
(72) Erfinder: SCHÜRMANN, Klaus, 41363 Jüchen (DE); SEBASTIAN, Lothar, 47239 Duisburg (DE)
(74) Vertreter: von dem Borne, Andreas
(86) Internationale Anmeldenummer: PCT/EP2011/070212
(87) Internationale Veröffentlichungsnummer: WO 2012/066017

(56) Entgegenhaltungen:
- WO-A2-2004/011169
- GB-A- 2 156 728
- GB-A- 2 442 856
- US-A1- 2010 155 984

## Beschreibung

Die Erfindung betrifft ein Verfahren zum Herstellen von zylindrischen Großstrukturen bzw. Großformteilen, insbesondere Rumpfteilen für den Flugzeugbau, aus faserverstärktem Kunststoff, wobei in einen Formraum zwischen einer zylindrischen Innenform und einer zylindrischen Außenform Fasern, vorzugsweise ein oder mehrere Faserhalbzeuge, und eine aushärtbare Kunststoffmasse eingebracht werden, wobei die zylindrische Innenform aus mehreren über den Umfang verteilten Innensegmenten und die Außenform aus mehreren über den Umfang verteilten Außensegmenten zusammengesetzt ist. Die Kunststoffmasse wird anschließend ausgehärtet. Bei der Kunststoffmasse handelt es sich in der Regel um eine duroplastische Kunststoffmasse, die für die Herstellung von faserverstärkten Kunststoffen und folglich Faserverbundwerkstoffen verwendet wird. Dabei werden die Fasern in einer Matrix aus Kunststoff eingebettet. Bei den Fasern kann es sich z. B. um Glasfasern und/oder Karbonfasern bzw. Kohlefasern, aber auch um andere Faserarten handeln. Die Fasern können lose, bevorzugt jedoch in Form von Halbzeugen als Fasermatten o. dgl. vorliegen. Großstruktur bzw. Großformteil meint insbesondere ein zylindrisches Formteil mit einem Durchmesser von zumindest 2 m, vorzugsweise zumindest 3 m. Es kann sich besonders bevorzugt um Rumpfteile für den Flugzeugbau handeln.

Es ist bekannt, beim Bau von Flugzeugrümpfen, insbes. röhren-, insbes. tonnenförmige Rumpfsektionen einzeln vorzufertigen und in einer anschließenden Endmontage zum fertigen Flugzeugrumpf zusammenzusetzen. Als Werkstoffe werden zunehmend Faserverbundwerkstoffe, wie z. B. karbonfaserverstärkte Kunststoffe (CFK) verwendet. Auf diese Weise lassen sich Flugzeugrümpfe mit hoher Stabilität und zugleich geringem Gewicht herstellen.

Aus der DE 10 2007 060 029 A1 kennt man ein Verfahren zur Herstellung eines röhrenförmigen Strukturbauteils, wobei ein röhrenförmiges Formwerkzeug bereitgestellt wird, welches eine entsprechend einer Außenfläche des Strukturbauteils geformte innere Formfläche aufweist. Die innere Formfläche wird von einem expandierbaren Träger gebildet, welcher derart geformt ist, dass er in einem nicht expandierten Zustand das Formwerkzeug unter Belassen eines Expansionsabstandes der Trägerfläche zur Formfläche ausfüllt. Der Träger wird im Formwerkzeug angeordnet und das Fasergelege wird an die Formfläche durch Expandieren des Trägers angepresst. Anschließend wird das Fasergelege mit einer aushärtbaren Matrix infiltriert.

Ein gattungsgemäßes Verfahren zum Herstellen von Rumpfteilen für den Flugzeugbau der eingangs beschriebenen Art ist zum Beispiel aus der US 2010/0155984 A1 bekannt.

Um die Fertigung von beispielsweise Rumpfteilen für den Flugzeugbau zu automatisieren, wurde außerdem der Einsatz von automatisierten Wickelmaschinen für die Faserhalbzeuge vorgeschlagen (vgl. US 7 048 024 B2).

Aus dem Bereich der Behältertechnik ist es bei Druckbehältern, z. B. für kerntechnische Anlagen, im Übrigen bekannt, auf den Druckbehälter außen Vorspannaggregate aufzusetzen, auf welche mit einer Wickelvorrichtung Vorspannelemente in Form von Seilen aufgewickelt werden (vgl. DE 27 16 020). Auf die Konstruktion von beispielsweise Rumpfteilen für den Flugzeugbau hatten derartige Entwicklungen keinen Einfluss.

Der Erfindung liegt die Aufgabe zugrunde, ein Verfahren zu schaffen, mit dem sich Großstrukturen bzw. Großformteile, insbes. Rumpfteile für den Flugzeugbau aus faserverstärktem Kunststoff, auf wirtschaftliche Weise mit hoher Qualität fertigen lassen.

Zur Lösung dieser Aufgabe lehrt die Erfindung bei einem gattungsgemäßen Verfahren zum Herstellen von zylindrischen Großstrukturen bzw. Großformteilen, dass die Außensegmente mit einem oder mehreren Spannseilen, welche um die Außenform bzw. die Außensegmente gewickelt werden, unter Zwischenschaltung der Fasern bzw. Faserhalbzeuge gegen die Innenform verspannt werden.

Dabei geht die Erfindung zunächst einmal von der Erkenntnis aus, dass sich die fertigen Großstrukturen bzw. Großformteile auf einfache Weise nach dem Formen entnehmen lassen, wenn die Innenform aus mehreren Innensegmenten besteht, so dass diese auf einfache Weise "nach innen" entfernt werden kann. Dieses hat insbesondere bei Werkstoffen mit negativem Temperaturkoeffizient, die sich folglich im Zuge des Aushärtens zusammenziehen, den Vorteil, dass ein einfaches Entformen des Bauteils gelingt. Aber auch die Außenform besteht aus mehreren über den Umfang verteilten Außensegmenten, so dass zudem eine verbesserte Handhabung realisiert wird. Dennoch lassen sich bei einer solchen Ausgestaltung die im Zuge des Formens bzw. Aushärtens auftretenden hohen Kräfte auf einfache Weise aufnehmen, denn die Außenform ist mit Hilfe von um die Außenform gewickelten Spannseilen gegen die Innenform verspannt. Damit gelingt ein einfacher Aufbau der Form, eine einfache Herstellung und insbesondere auch ein einfaches Entnehmen der Form bzw. ein einfaches Entformen des fertigen Bauteils.

Bevorzugt wird zunächst die Innenform aus den Innensegmenten zusammengesetzt und anschließend werden auf die Innenform die Fasern bzw. Faserhalbzeuge aufgebracht, z. B. um die Innenform gewickelt. Danach wird die Außenform aus den einzelnen Außensegmenten aufgesetzt bzw. zusammengesetzt und mittels der Spannseile verspannt. Schließlich wird dann die Formmasse in den Formraum eingebracht, z. B. eingespritzt. Dabei ist es zweckmäßig, die Form vor und/oder während des Formens zu temperieren, vorzugsweise zu beheizen. Die Formmasse härtet dann unter Einschluss der Fasern aus.

Unter Berücksichtigung der Tatsache, dass beispielsweise Rumpfteile für Flugzeuge in der Regel mit Versteifungselementen versehen sind, schlägt die Erfindung in bevorzugter Weiterbildung vor, dass vor dem Aufsetzen der Außenform und vorzugsweise auch vor dem Aufbringen der Fasern bzw. Faserhalbzeuge Versteifungselemente, z. B. Stringer, Spanten o. dgl. auf die Innenform aufgesetzt werden. Dazu weist die Innenform auf ihrer der Außenform zugewandten Außenfläche und folglich auf der Formfläche in der Regel Ausnehmungen als gleichsam Aufnahmen für die Versteifungselemente auf. Bei den Versteifungselementen kann es sich beispielsweise um gebogene Spanten und/oder in Längsrichtung verlaufende Stringer handeln. Auf die beschriebene Weise lassen sich solche Versteifungselemente, die im Flugzeugbau üblich sind, auf einfache Weise in den erfindungsgemäßen Herstellungsprozess integrieren.

Um das fertige Formteil aus der Form zu entnehmen, schlägt die Erfindung weiter vor, zunächst die Innenform zu entfernen, indem vorzugsweise die einzelnen Innensegmente in radialer Richtung zusammengezogen werden. Dazu ist es zweckmäßig, die Innensegmente an ihren aneinander liegenden Stirnflächen voneinander zu trennen und dann gleichsam nach innen einzuklappen. Die Innensegmente (bzw. mehrere Innensegmente) können ggf. schwenkbar miteinander verbunden sein aber auch von Einzelteilen gebildet werden. Dabei sind die aneinander anliegenden Stirnflächen bzw. Stoßflächen der einzelnen Segmente vorzugsweise so ausgebildet, dass im zusammengesetzten Zustand eine stabile Struktur entsteht, die dem Druck der gespannten Außenform standhält. Dazu kann es zweckmäßig sein, im Zuge des Zusammensetzens der Innenform zwischen den zuletzt eingesetzten Innensegmenten ein Stabilisierungsbauteil, z. B. einen Stabilisierungskeil, eine Stabilisierungsleiste o. dgl. einzusetzen. Im Zuge des Entformens wird diese zunächst entnommen, so dass sich dann die Innensegmente einfach nach innen einklappen lassen.

Bei einer abgewandelten Ausführungsform besteht die Möglichkeit, dass die einzelnen Innensegmente gemeinsam an einer automatisierten Kontraktionsvorrichtung befestigt sind, mit welcher die einzelnen Innensegmente über einen oder mehrere geeignete Antriebe gleichzeitig oder nacheinander in radialer Richtung nach innen gezogen werden. Eine solche Kontraktionsvorrichtung kann z. B. einen zentralen Halter bzw. eine zentrale Nabe aufweisen, an welchem die einzelnen Innensegmente unter Zwischenschaltung von Verbindungsstangen gelenkig angeschlossen sind. Durch Drehen des zentralen Halters können dann über die Verbindungsstangen die einzelnen Innensegmente nach innen gezogen werden. Über die Verbindungsstangen, die dann während des Herstellungsprozesses in radialer Richtung ausgerichtet sind, können auch verhältnismäßig hohe Kräfte aufgenommen werden.

Im Rahmen der Erfindung kommt es u. a. darauf an, auf die zusammengesetzte Außenform die beschriebenen Spannseile, z. B. Stahlseile, aufzuwickeln. Dazu ist in der Regel eine Wickelvorrichtung vorgesehen. Besonders bevorzugt wird die zusammengesetzte Form zum Aufwickeln der Spannseile selbst gedreht und dabei werden die Seile von einer Seilhaspel oder von mehreren Seilhaspeln abgewickelt. Auf diese Weise wird vermieden, die schweren Seilhaspeln über große Wege um die ruhende Form zu transportieren. Vielmehr können die Seilhaspeln ortsfest angeordnet sein. Stattdessen wird die Form mit Hilfe eines geeigneten Antriebes in Rotation versetzt, so dass die Seile abgezogen und aufgewickelt werden.

Gegenstand der Erfindung ist auch eine Vorrichtung zum Herstellen von zylindrischen Großstrukturen bzw. Großformteilen, insbes. Rumpfteilen für den Flugzeugbau mit einem Verfahren der beschriebenen Art. Diese Vorrichtung weist im Rahmen der Erfindung eine Innenform auf, welche aus mehreren Innensegmenten zusammengesetzt ist und eine Außenform, welche aus mehreren Außensegmenten zusammengesetzt ist. Ferner ist eine Wickelvorrichtung zum Umwickeln der Außenform mit den Spannseilen vorgesehen. Die Wickelvorrichtung weist vorzugsweise ein oder mehrere Seilhaspeln auf, von denen die Seile abgewickelt werden. Dabei weist die Wickelvorrichtung vorzugsweise eine Drehaufnahme für die Form auf, wobei die Form auf oder an dieser Drehaufnahme befestigt wird und wobei die Drehaufnahme mit einem Drehantrieb zum Drehen der Form im Zuge des Abwickelns der Stahlseile ausgebildet ist.

Um das Aufwickeln der Seile auf die Außenform bzw. die Außensegmente zu erleichtern und eine gleichmäßige Verspannung zu gewährleisten, schlägt die Erfindung in bevorzugter Weiterbildung vor, dass die Außenform bzw. deren Außensegmente außenseitig zumindest eine spiralförmig umlaufende Nut bzw. Rille aufweisen, in welche die Spannseile während des Umwickelns eingelegt bzw. in welchen die Spannseile geführt werden.

Die Innenform und/oder die Außenform bzw. deren Segmente sind vorzugsweise mit Heizkanälen und/oder Kühlkanälen für das Temperieren der Form vor und/oder während des Aushärtens ausgestattet. Außerdem ist die Form mit geeigneten Zuführkanälen ausgerüstet, über welche die aushärtbare Formmasse in den Formraum einbringbar, z. B. einspritzbar ist. Besonders bevorzugt erfolgt die Zuführung der Formmasse über die Innenform. Dazu können mehrere in radialer Richtung ausgerichtete Zuführkanäle in die Innenform eingebracht sein, welche in den Formraum münden. Diese Zuführkanäle sind mit entsprechenden Mischköpfen bzw. Spritzköpfen verbunden, welche innenseitig an die Innenform angesetzt sein können.

Insgesamt lassen sich im Rahmen der Erfindung Großstrukturen bzw. Großformteile aus faserverstärktem Kunststoff, insbes. Rumpfteile für den Flugzeugbau, auf einfache Weise wirtschaftlich mit hoher Qualität herstellen.

Im Folgenden wird die Erfindung anhand einer lediglich ein Ausführungsbeispiel darstellenden Zeichnung näher erläutert. Es zeigen
- Fig. 1: ausschnittsweise eine Innenform für die Herstellung eines Rumpfteils für den Flugzeugbau mit einem eingelegten Verteilerpaket,
- Fig. 2: den Gegenstand nach Fig. 1 mit eingelegten Versteifungselementen und aufgebrachtem Faserhalbzeug,
- Fig. 3: die vollständige Innenform mit Versteifungselementen während des Aufwickelns des Faserhalbzeuges,
- Fig. 4: den Gegenstand nach Fig. 2 mit aufgebrachter Außenform und zum Teil aufgewickelten Stahlseilen,
- Fig. 5: die gesamte Form mit zum Teil aufgewickelten Stahlseilen (entsprechend Fig. 4),
- Fig. 6: den Gegenstand nach Fig. 5 in einer Stirnansicht zu Beginn des Entfernens der Innenform,
- Fig. 7: den Gegenstand nach Fig. 6 während des Entfernens der Innenform,
- Fig. 8: den Gegenstand nach Fig. 7 in einer perspektivischen Darstellung während des Entfernens der Außenform,
- Fig. 9: eine Wickelvorrichtung in einer ersten Ansicht,
- Fig. 10: eine Wickelvorrichtung in einer zweiten Ansicht, und
- Fig. 11a, b, c: eine abgewandelte Ausführungsform der Erfindung (Ausschnitt).

Mit dem in den Figuren dargestellten Verfahren bzw. mit der in den Figuren dargestellte Vorrichtung lassen sich zylindrische Großstrukturen, z. B. Rumpfteile für den Flugzeugbau aus faserverstärktem Kunststoff herstellen.

Die Form für die Herstellung solcher Großstrukturen besteht aus einerseits einer Innenform 1 und andererseits einer Außenform 2, wobei zwischen Innenform und Außenform ein Formraum 3 gebildet wird. Innerhalb des Formraums 3 sind Faserhalbzeuge 4 angeordnet und zum Herstellen des Formteils wird dann in den Formraum 3 die aushärtbare Kunststoffmasse 5 als Matrix eingebracht.

Die erfindungsgemäße Innenform 1 besteht aus mehreren über den Umfang verteilten Innensegmenten 1a und die Außenform 2 besteht aus mehreren über den Umfang verteilten Außensegmenten 2a.

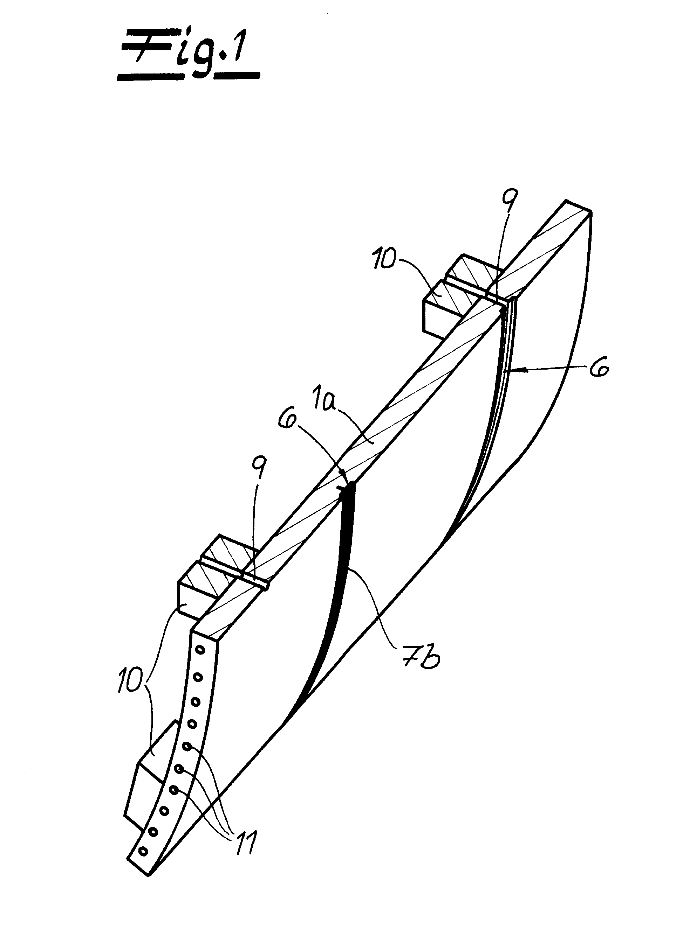

Das Zusammensetzen der Form und das Herstellen des Formteils lässt sich anhand einer vergleichenden Betrachtung der Fig. 1 bis 5 erläutern.

Fig. 1 zeigt zunächst lediglich ausschnittsweise die Innenform 1 bzw. in einem perspektivischen Schnitt ein Innensegment 1a. Es ist erkennbar, dass dieses Innensegment mit Ausnehmungen 6 versehen ist, in welche Versteifungselemente 7a, 7b einsetzbar sind. Bei den Versteifungselementen handelt es sich zum einen um in Längsrichtung des Zylinders verlaufende Stringer 7a und zum anderen um gebogene und folglich in Umfangsrichtung verlaufende Spanten 7b.

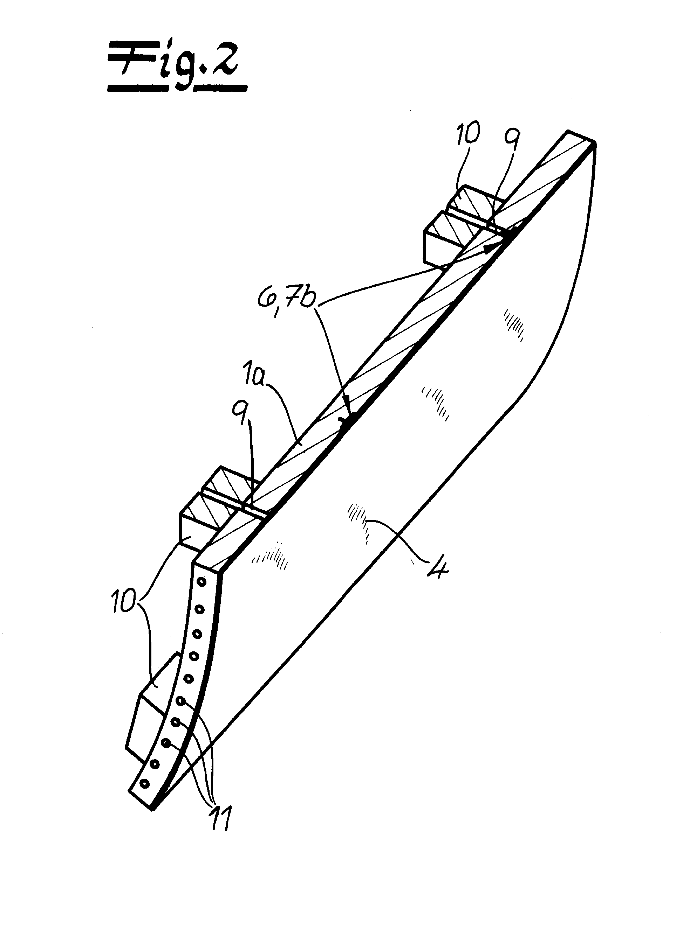

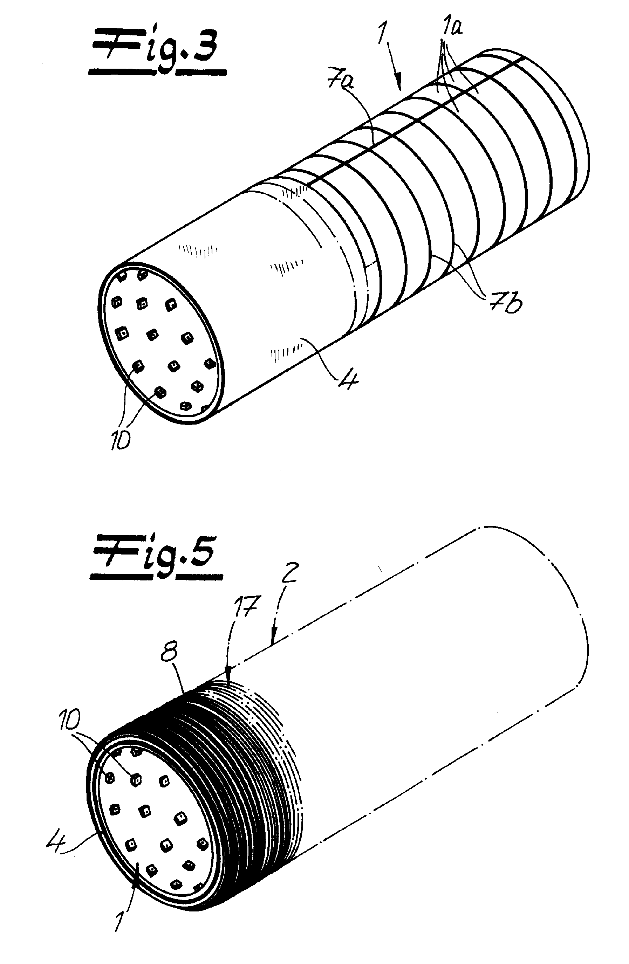

Nachdem die Versteifungselemente 7a, 7b in die Ausnehmungen bzw. Aufnahmen 6 eingelegt wurden, wird das Faserhalbzeug 4 aufgebracht, und zwar vorzugsweise aufgewickelt. Dieses ergibt sich aus einer vergleichenden Betrachtung der Fig. 2 und 3.

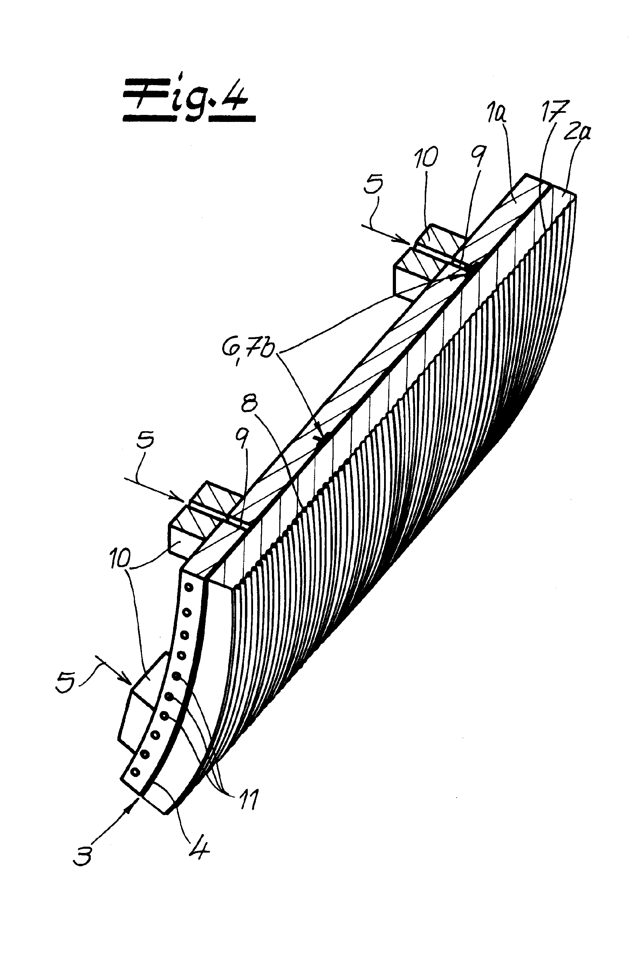

Nachdem das Faserhalbzeug 4 vollständig aufgewickelt wurde, wird die Außenform 2 aufgesetzt, welche aus den Außensegmenten 2a besteht. Um die Außenform 2 werden dann Spannseile 8 gewickelt, d. h. die Außenform 2 wird unter Zwischenschaltung des Faserhalbzeuges 4 gegen die Innenform 1 mit Hilfe der Spannseile 8 verspannt. Die Fig. 4 und 5 zeigen dabei in unterschiedlichen Ansichten die Form, bestehend aus Innenform 1 und Außenform 2 mit teilweise aufgewickelten Spannseilen 8.

Nachdem die Außenform 2 vollständig gegen die Innenform 1 verspannt wurde, kann die Kunststoffformmasse 5 in den Formraum 3 eingespritzt werden. Dieses ist durch die Pfeile 5 angedeutet.

Es ist erkennbar, dass zum Einbringen der Formmasse die Innenform 1 mit (radial orientierten) Kanälen 9 versehen ist, welche wiederum an Spritzköpfe bzw. Mischköpfe 10 angeschlossen sind. Die Spritzköpfe bzw. Mischköpfe 10 sind dabei innenseitig an die Innenform 1 angesetzt.

Vor und/oder während des Aushärtens der Formmasse werden die Innenform 1 und/oder die Außenform 2 temperiert. Dazu sind sowohl die Innenform 1 als auch die Außenform 2 mit Heizkanälen 11 versehen, welche im Ausführungsbeispiel in Längsrichtung des Zylinders verlaufen. Sie sind nur für die Innenform angedeutet. Durch die Temperierung härtet die Formmasse 5 unter Einschluss der Fasern bzw. des Faserhalbzeuges 4 aus, so dass das herzustellende Großformteil, z. B. ein Rumpfteil entsteht.

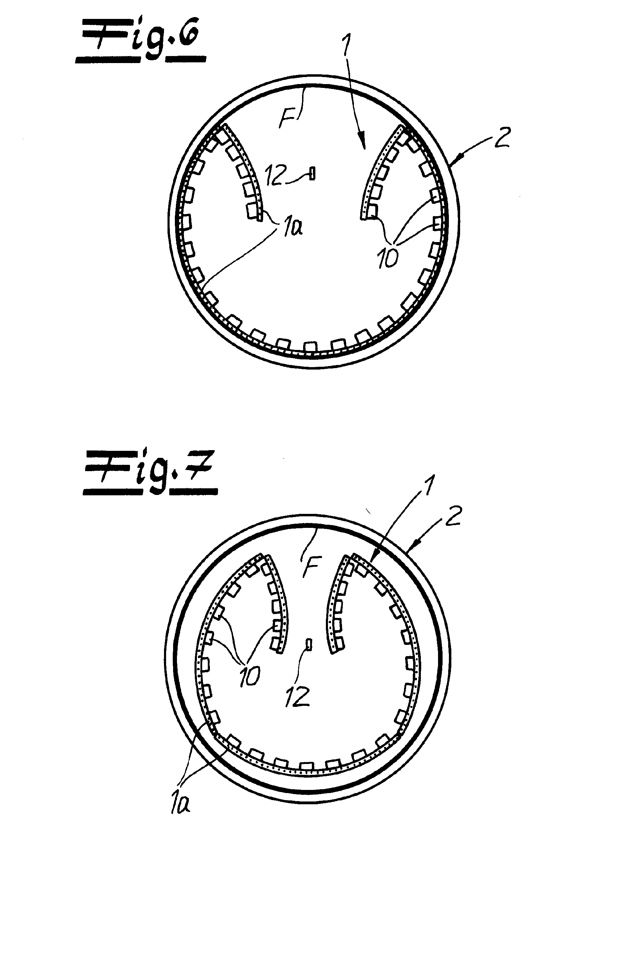

Um dieses fertige Formteil F aus der Form entnehmen zu können, wird bevorzugt zunächst die Innenform 1 entfernt. Dieses ergibt sich aus einer vergleichenden Betrachtung der Fig. 6 bis 8.

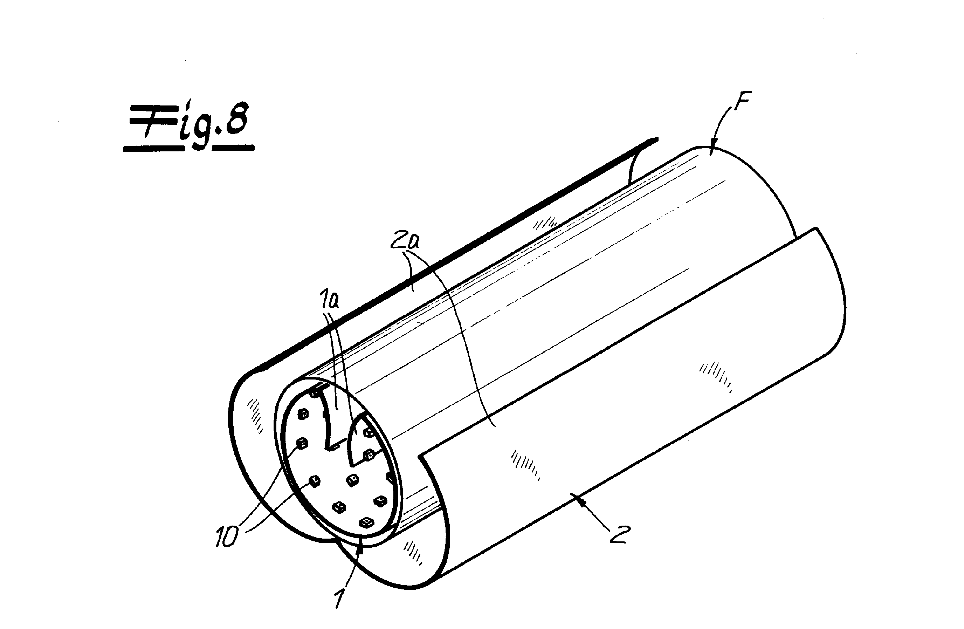

In Fig. 6 ist erkennbar, dass zunächst zwischen zwei Stoßstellen zweier benachbarter Innensegmente 1a ein Arretierungskeil bzw. Arretierungsleiste 12 entnommen wird, die auch als Kopfstück oder Schlussstein bezeichnet werden kann, so dass die Innenform gleichsam radial nach innen zusammengeklappt und entnommen werden kann (Fig. 7). Anschließend wird die Außenform 2, die im Ausführungsbeispiel aus zwei Segmenten 2a besteht, aufgeklappt (vgl. Fig. 8), so dass das fertige Formteil F entnommen werden kann.

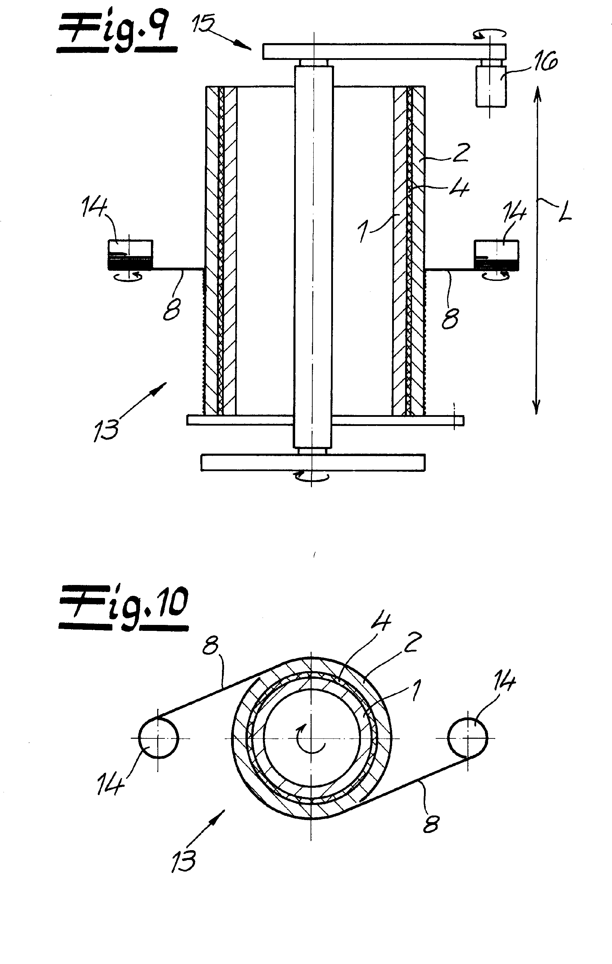

Dem Aufwickeln der Spannseile 8 kommt im Rahmen der Erfindung besondere Bedeutung zu. Dazu stellt die Erfindung in einer bevorzugten Weiterbildung eine Wickelvorrichtung 13 zum Aufwickeln der Stahlseile auf die Außenform 2 zur Verfügung. Im dem dargestellten Ausführungsbespiel weist diese Wickelvorrichtung zwei Seilhaspeln 14 auf, von denen die Stahlseile 8 abgewickelt werden. Ferner weist die Wickelvorrichtung 13 eine Drehvorrichtung 15 für die Form auf, die sich aus Innenform 1 und Außenform 2 zusammensetzt. Diese Drehvorrichtung 15 bzw. Drehaufnahme ist mit einem Drehantrieb 16 versehen. Folglich wird zum Aufwickeln der Stahlseile 8 auf die Außenform 2 die Form 1, 2 mit Hilfe der Drehvorrichtung 15 gedreht, so dass die Stahlseile 8 von den Seilhaspeln 14 abgezogen werden (vgl. insbes. Fig. 9 und 10).

Um ein einwandfreies Aufwickeln der Stahlseile auf die Außenform 2 zu gewährleisten, ist die Außenform 2 mit Nuten bzw. Rillen 17 versehen. Im Ausführungsbeispiel handelt es sich um eine spiralförmig auf dem Außenumfang der Außenform 2 angeordnete Rille 17. Dabei sind die Seilhaspeln 14 in Längsrichtung L der Form verschiebbar, um die Spannseile sukzessive aufwickeln zu können.

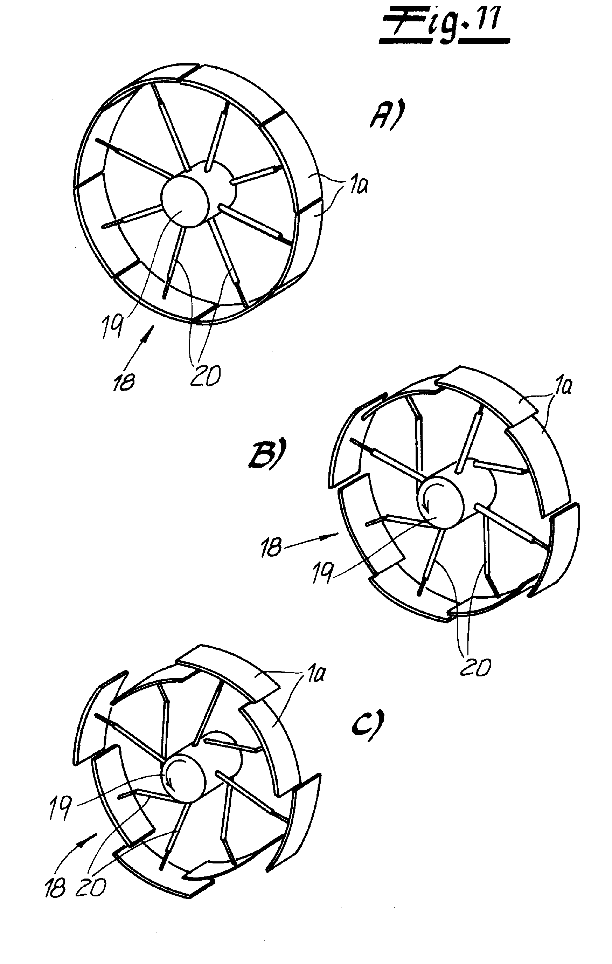

Ferner kommt der mehrteiligen Innenform 1 im Rahmen der Erfindung besondere Bedeutung zu, da durch das Zusammenziehen der Innenform 1 ein einfaches Entformen des Bauteils möglich ist. Eine erste Ausführungsform war anhand der Fig. 6 bis 8 erläutert worden. Eine abgewandelte Ausführungsform zeigen die Fig. 11a, 11b und 11c.

Bei dieser Ausführungsform sind die Innensegmente 1a an eine automatisierte Kontraktionsvorrichtung 18 angeschlossen. Diese Kontraktionsvorrichtung weist einen zentralen Halter bzw. zentralen Nabe 19 auf, mit dem die Innensegmente 1a unter Zwischenschaltung von Verbindungsstangen 20 gelenkig angeschlossen sind. Eine vergleichende Betrachtung der Fig. 11a, 11b und 11c zeigt, dass durch Drehen der zentralen Nabe 19 die Innensegmente 1a automatisch zurückgezogen werden können.

Mit dem beschriebenen Verfahren und der beschriebenen Vorrichtung werden vorzugsweise Großstrukturen mit einem Durchmesser von mehr als 3 m, besonders bevorzugt mehr als 4 m hergestellt. In einem solchen Fall weisen die Innenform und/oder die Außenform vorzugsweise eine Wandstärke von mehr als 50 mm, vorzugsweise mehr als 80 mm, z. B. 100 mm oder mehr auf. Bei dem Spannseil handelt es sich bevorzugt um ein Stahlseil, welches einen Durchmesser von mehr als 10 mm, vorzugsweise mehr als 20 mm, z. B. 30 mm oder mehr aufweisen kann.

## Patentansprüche

1. Verfahren zum Herstellen von zylindrischen Großstrukturen bzw. Großformteilen (F), insbesondere Rumpfteilen für den Flugzeugbau aus faserverstärktem Kunststoff, wobei in einen Formraum (3) zwischen einer zylindrischen Innenform (1) und einer zylindrischen Außenform (2) Fasern, vorzugsweise ein oder mehrere Faserhalbzeuge (4), und eine aushärtbare Kunststoffmasse (5) eingebracht werden,
wobei die zylindrische Innenform (1) aus mehreren über den Umfang verteilten Innensegmenten (1a) und die Außenform (2) aus mehreren über den Umfang verteilten Außensegmenten (2a) zusammengesetzt wird dadurch g e-kennzeichnet,
dass die Außensegmente (2a) mit einem oder mehreren Spannseilen (8), welche um die Außensegmente (2) gewickelt werden, unter Zwischenschaltung der Fasern bzw. Faserhalbzeuge (4) gegen die Innenform (1) verspannt werden.

2. Verfahren nach Anspruch 1, **dadurch gekennzeichnet, dass**
zunächst die Innenform (1) aus den Innensegmenten (1a) zusammengesetzt wird,
anschließend die Fasern oder zumindest ein Faserhalbzeug (4) auf die Innenform (1) aufgebracht, z. B. auf die Innenform aufgewickelt wird,
dann die Außenform (2) aufgesetzt und mittels der Spannseile (8) verspannt wird und
schließlich die Formmasse (5) in den Formraum (3) eingebracht, z. B. eingespritzt wird.

3. Verfahren nach Anspruch 1 oder 2, **dadurch gekennzeichnet, dass** vor dem Aufsetzen der Außenform (2) und vorzugsweise vor dem Aufbringen der Fasern bzw. Faserhalbzeuge (4) Versteifungselemente (7a, 7b), z. B. Stringer, Spanten o. dgl., auf die Innenform (1) aufgesetzt werden, z. B. in außenseitige Ausnehmungen (6) der Innenform (1).

4. Verfahren nach einem der Ansprüche 1 bis 3, **dadurch gekennzeichnet, dass** zum Entformen des fertigen Formteils (5) zunächst die Innenform (1) in radialer Richtung zusammengezogen wird, indem z. B. die einzelnen Innensegmente (1 a) voneinander getrennt und/oder gegeneinander verschwenkt werden.

5. Verfahren nach einem der Ansprüche 1 bis 4, **dadurch gekennzeichnet, dass** die zusammengesetzte Form (1, 2) zum Aufwickeln und Spannen der Spannseile (8) gedreht und dabei die Spannseile (8) von zumindest einer Seilhaspel (14) abgewickelt werden.

6. Vorrichtung zum Herstellen von zylindrischen Großstrukturen bzw. Großformteilen, insbes. Rumpfteilen für den Flugzeugbau aus faserverstärktem Kunststoff, nach einem Verfahren nach einem der Ansprüche 1 bis 5,
mit einer Innenform (1), welche aus mehreren Innensegmenten (1a) zusammengesetzt ist und einer Außenform (2), welche aus mehreren Außensegmenten (2a) zusammengesetzt ist und
mit einer Wickelvorrichtung (13) zum Umwickeln der Außenform (2) mit den Spannseilen (8).

7. Vorrichtung nach Anspruch 6, **dadurch gekennzeichnet, dass** die Wickelvorrichtung (13) ein oder mehrere Seilhaspeln (14) aufweist, von denen das Spannseil (8) abwickelbar ist.

8. Vorrichtung nach Anspruch 6 oder 7, **dadurch gekennzeichnet, dass** die Wickelvorrichtung (13) eine Drehaufnahme (15) für die Form (1, 2) aufweist, wobei an die Drehaufnahme (15) ein Drehantrieb (16) zum Drehen der Form (1, 2) angeschlossen ist.

9. Vorrichtung nach einem der Ansprüche 6 bis 8, **dadurch gekennzeichnet, dass** die Außenform (2) bzw. deren Segmente (2a) außenseitig zumindest eine spiralförmig umlaufende Nut oder Rille (17) aufweist/aufweisen, in welche die Spannseile (8) während des Wickelns eingelegt werden.

10. Vorrichtung nach einem Ansprüche 6 bis 9, **dadurch gekennzeichnet, dass** die Innenform (1) und/oder die Außenform (2) mit Heizkanälen und/oder Kühlkanälen versehen ist/sind.

11. Vorrichtung nach einem der Ansprüche 1 bis 10, **dadurch gekennzeichnet, dass** die Innenform mit einer automatisierten Kontraktionsvorrichtung (18) versehen ist, mit der die Innensegmente (1a) zum Entformen des Bauteils zusammenziehbar sind.

## Claims

1. A method for the manufacture of large cylindrical structures and/or large moulded parts (F), in particular fuselage parts for aircraft construction from fibre-reinforced plastic, wherein fibres, preferably one or a plurality of semi-finished fibre products (4), and a curable plastic material (5) are introduced into a moulding cavity (3) between a cylindrical inner mould (1) and a cylindrical outer mould (2), wherein
the cylindrical inner mould (1) is composed from a plurality of inner segments (1a) distributed over the periphery, and the outer mould (2) is composed from a plurality of outer segments (2a) distributed over the periphery,
**characterised in that**,
the outer segments (2a) are clamped against the inner mould (1), with the interposition of the fibres, and/or semi-finished fibre products (4), with one or a plurality of tension cables (8), which are wound around the outer segments (2).

2. The method in accordance with Claim 1, **characterised in that**,
the inner mould (1) is firstly composed from the inner segments (1a),
the fibres, or at least one semi-finished fibre product (4), are then applied onto the inner mould (1), e.g. are wound onto the inner mould,
the outer mould (2) is then set in place and clamped by means of the tension cables (8), and
finally the moulding material (5) is introduced into the moulding cavity (3), e.g. is injected into the latter.

3. The method in accordance with Claim 1 or 2, **characterised in that**, before the outer mould (2) is set in place, and preferably before the application of the fibres and/or semi-finished fibre products (4) stiffening elements (7a, 7b), e.g. stringers, frames, or similar, are set in place on the inner mould (1), e.g. in recesses (6) on the outer face of the inner mould (1).

4. The method in accordance with one of the Claims 1 to 3, **characterised in that**, for purposes of removing the finished moulded part (5) from the mould the inner mould (1) is contracted, e.g. by separating the individual inner segments (1a) from one another, and/or pivoting them relative to one another.

5. The method in accordance with one of the Claims 1 to 4, **characterised in that**, the composed mould (1, 2) is rotated for purposes of winding on and tensioning the tension cables (8), and at the same time the tension cables (8) are unwound from at least one cable reel (14).

6. A device for the manufacture of large cylindrical structures and/or large moulded parts, in particular fuselage parts for aircraft construction from fibre-reinforced plastic, in accordance with a method in accordance with one of the Claims 1 to 5,
with an inner mould (1), which is composed from a plurality of inner segments (1a), and an outer mould (2), which is composed from a plurality of outer segments (2a), and
with a winding device (13) for purposes of winding the tension cables (8) around the outer mould (2),

7. The device in accordance with Claim 6, **characterised in that**, the winding device (13) has one or a plurality of cable reels (14), from which the tension cable (8) can be unwound.

8. The device in accordance with Claim 6 or 7, **characterised in that**, the winding device (13) has a rotary holding fixture (15) for the mould (1, 2), wherein a rotary drive (16) is connected to the rotary holding fixture (15) for purposes of rotating the mould (1, 2)

9. The device in accordance with one of the Claims 6 to 8, **characterised in that**, the outer mould (2) and/or its segments (2a) has/have on its/their outer face at least one groove or channel (17) spiralling around its periphery, into which the tension cables (8) are laid during the winding process.

10. The device in accordance with one of the Claims 6 to 9, **characterised in that**, the inner mould (1) and/or the outer mould (2) is/are provided with heating channels and/or cooling channels.

11. The device in accordance with one of the Claims 1 to 10, **characterised in that**, the inner mould is provided with an automated contraction device (18), with which the inner segments (1a) can be pulled together for purposes of removing the component from the mould.

## Revendications

1. Procédé de fabrication de grandes structures, respectivement, de grandes pièces moulées (F) cylindriques, en particulier de pièces de fuselage pour la construction d'avions, en plastique renforcé par des fibres, sachant que dans un espace de moule (3), des fibres, de préférence un ou plusieurs produit (s) semi-fini (s) de fibres (4), et une masse plastique durcissable (5) sont insérés entre un moule intérieur (1) cylindrique et un moule extérieur (2) cylindrique,
sachant que le moule intérieur (1) cylindrique est composé d'une pluralité de segments intérieurs (1a) répartis sur le pourtour, et le moule extérieur (2) est composé de plusieurs segments extérieurs (2a) répartis sur le pourtour, **caractérisé en ce que**
les segments extérieurs (2a) sont tendus contre le moule intérieur (1) par un ou plusieurs câble (s) de tension (8) qui sont entourés autour des segments extérieurs (2), avec les fibres, respectivement les produits semi-finis de fibres (4) en intermédiaire.

2. Procédé selon la revendication 1, **caractérisé en ce que** le moule intérieur (1) est d'abord composé des segments intérieurs (1a),
ensuite, les fibres ou au moins un produit semi-fini de fibres (4) est appliqué sur le moule intérieur (1), est enroulé sur le moule intérieur par exemple,
puis le moule extérieur (2) est placé et tendu via les câbles de tension (8) et
enfin, la masse de moulage (5) est insérée, par exemple injectée, dans l'espace de moule (3).

3. Procédé selon la revendication 1 ou 2, **caractérisé en ce qu'**avant de placer le moule extérieur (2) et de préférence avant d'appliquer les fibres, respectivement les produits semi-finis de fibres (4), des éléments de renforcement (7a, 7b), par ex. des lisses, des membrures ou similaire, sont placés sur le moule intérieur (1), par ex. dans des évidements (6) sur le côté extérieur du moule intérieur (1).

4. Procédé selon l'une des revendications 1 à 3, **caractérisé en ce que** pour démouler la pièce moulée (5) finie, le moule intérieur (1) est d'abord tiré dans le sens radial, **en ce que** les segments intérieurs (1a) individuels sont séparés les uns des autres et/ou basculés les uns contre les autres.

5. Procédé selon l'une des revendications 1 à 4, **caractérisé en ce que** le moule constitué (1, 2) est tourné pour enrouler et tendre les câbles de tension (8) et les câbles de tension (8) sont alors déroulés par au moins un dévidoir de câble (14).

6. Dispositif de fabrication de grandes structures, respectivement, de grandes pièces moulées (F) cylindriques, en particulier de pièces de fuselage pour la construction d'avions, en plastique renforcé par des fibres, selon un procédé selon l'une des revendications 1 à 5,
comprenant un moule intérieur (1) composé d'une pluralité de segments intérieurs (1a) et un moule extérieur (2) composé de plusieurs segments extérieurs (2a) et
comprenant un dispositif d'enroulement (13) pour enrouler le moule extérieur (2) avec les câbles de tension (8).

7. Dispositif selon la revendication 6, **caractérisé en ce que** le dispositif d'enroulement (13) présente un ou plusieurs dévidoir(s) de câble (14) depuis lesquels le câble de tension (8) peut être déroulé.

8. Dispositif selon la revendication 6 ou 7, **caractérisé en ce que** le dispositif d'enroulement (13) présente une réception rotative (15) pour le moule (1, 2), sachant qu'un entraînement en rotation (16) est raccordé à la réception rotative (15) pour faire tourner le moule (1, 2).

9. Dispositif selon l'une des revendications 6 à 8, **caractérisé en ce que** le moule extérieur (2), respectivement ses segments (2a), présentent au moins une rainure ou une encoche (17) hélicoïdale sur l'extérieur, dans laquelle les câbles de tension (8) sont placés pendant l'enroulement.

10. Dispositif selon l'une des revendications 6 à 9, **caractérisé en ce que** le moule intérieur (1) et/ou le moule extérieur (2) est/sont doté(s) de canaux de chauffage et/ou de refroidissement.

11. Dispositif selon l'une des revendications 1 à 10, **caractérisé en ce que** le moule intérieur est doté d'un dispositif de contraction automatisé (18) avec lequel le segments intérieurs (1a) peuvent être tirés pour démouler la pièce moulée.
